(19) **Europäisches Patentamt**
**European Patent Office**
**Office européen des brevets**

(11) **EP 2 282 926 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(21) Anmeldenummer: **08840783.8**

(22) Anmeldetag: **19.12.2008**

(51) Int Cl.:
***B62J 27/00*** *(2006.01)*

(86) Internationale Anmeldenummer:
**PCT/EP2008/067964**

(87) Internationale Veröffentlichungsnummer:
**WO 2009/143914 (03.12.2009 Gazette 2009/49)**

(54) **VERFAHREN UND VORRICHTUNG ZUM STABILISIEREN VON FAHRBEWEGUNGEN EINES EINSPURIGEN KRAFTFAHRZEUGS**

METHOD AND DEVICE FOR STABILIZING DRIVING MOVEMENTS OF A TWO-WHEEL MOTOR VEHICLE

PROCÉDÉ ET DISPOSITIF DE STABILISATION DES MOUVEMENTS DE DÉPLACEMENT D'UN VÉHICULE AUTOMOBILE À VOIE UNIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.05.2008 DE 102008001970**

(43) Veröffentlichungstag der Anmeldung:
**16.02.2011 Patentblatt 2011/07**

(73) Patentinhaber: **Robert Bosch GmbH**
**70442 Stuttgart (DE)**

(72) Erfinder:
• **SEIDEL, Juergen**
**73728 Esslingen (DE)**

• **NIEWELS, Frank**
**71634 Ludwigsburg (DE)**
• **WALDSCHMIDT, Christian**
**70197 Stuttgart (DE)**
• **MOERBE, Matthias**
**74360 Ilsfeld-Helfenberg (DE)**
• **ZIEGLER, Peter**
**71723 Grossbottwar (DE)**
• **HOENLE, Stephan**
**70825 Korntal-Muenchingen (DE)**

(56) Entgegenhaltungen:
**WO-A-2008/113666 DE-A1- 10 235 378**
**DE-A1- 10 350 046 DE-A1-102005 003 981**
**US-B2- 7 006 901**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft ein Verfahren zum Stabilisieren von Fahrbewegungen eines einspurigen Kraftfahrzeuges, wie einem Motorrad, bei dem über Neigungssensoren ein Neigungswinkel des Kraftfahrzeugs relativ zur Fahrbahn erfasst wird und nach Verarbeitung des Neigungswinkels in einer Recheneinrichtung ein darauf basierendes Steuersignal einer Steuervorrichtung zum Bewirken eines Stabilisierungseingriffes in die Fahrbewegung zugeführt wird.

Unter einem Schwimmwinkel wird der Drehwinkel des gesamten Fahrzeugs gegen die Bewegungsrichtung verstanden. Dieser Schwimmwinkel tritt in Kurvenfahrten und insbesondere beim Driften auf.

Abweichend davon wird unter einem Schräglaufwinkel der Winkel verstanden, der zwischen der Richtung, in die ein Rad zeigt und der Richtung, in der sich das Rad tatsächlich auf der Fahrbahn bewegt, vorliegt. Der Schräglaufwinkel ist der Winkel zwischen einer Schnittlinie, einer Radmittelebene und einer Fahrbahnebene einerseits, und einer Projektion eines Geschwindigkeitsvektors einer Radmitte auf die Fahrbahn andererseits.

Die Schräglaufwinkel an den Rädern können unterschiedlich zum Schwimmwinkel des gesamten Fahrzeugs sein.

Aus dem Stand der Technik, etwa der DE 4117540 A1 ist eine Einrichtung zur Bestimmung von Nick- und Rollwinkeln bei Kraftfahrzeugen bekannt. Über drei Ultraschallsensoren wird dabei ein Nick- und Rollwinkel sowie die Höhe über der Fahrbahn, relativ vom Fahrzeugboden aus gesehen, bestimmt. Dabei sind drei Ultraschallsensoren derart angeordnet, dass sie zwischen sich eine Ebene aufspannen.

Aus der Deutschen Offenlegungsschrift DE 10238526 A1 ist ein Verfahren und eine Vorrichtung zur Neigungserkennung offenbart. Dabei werden Ultraschall-, Lidar- und Radarsensoren als geeignet zum Ermitteln einer Neigung eines einspurigen Kraftfahrzeuges offenbart.

Aus der US 7,006,901 B2 ist ein Verfahren und eine Vorrichtung mit den Merkmalen der Präambel der unabhängigen Ansprüche 1 (Verfahren) und 8 (Vorrichtung) bekannt.

Es hat sich jedoch in der Vergangenheit gezeigt, dass die alleinige Messung der Fahrzeugposition zur Fahrbahn bei einem einspurigen Kraftfahrzeug, wie etwa einem Motorrad, oft nicht ausreicht, um dieses Fahrzeug auch in schwierigen Fahrmanövern ausreichend zu stabilisieren. Insbesondere beim Beschleunigen aus Kurven besteht die Gefahr, dass ein zu großer Schräglaufwinkel zu einem Sturz führt. Der Schräglaufwinkel wird in der Literatur auch als Driftwinkel bezeichnet.

Besonders kritische Situationen entstehen dann, wenn am Hinterrad große Schräglaufwinkel vorliegen. Dies findet ihre Ursache in zwei Fällen, nämlich zum einen, dass bei einem zu großen Schräglaufwinkel das Hinterrad "ausbricht" und das Fahrzeug somit zur Kurvenmitte stürzt und andererseits, wenn das "ausbrechende Hinterrad" plötzlich wieder höhere Reibwerte auf einem anderen Fahrbahnabschnitt auffindet, somit wieder "auf der Fahrbahn greift", wodurch sich das Fahrzeug ruckartig aufstellt und aus der Kurve hinausstürzt.

Besonders kritisch sind auch sogenannte Lastwechselvorgänge, bedingt durch die Veränderung des Gasgriffes, durch ein- oder auskuppeln und/oder bremsen.

Ein Sturz des Kraftfahrzeuges, also des Zweirades, wie einem Motorrad, ist nicht nur für die Nutzer dieses Kraftfahrzeuges gefährlich, sondern gefährdet auch bis dahin unbeteiligte Dritte. Solche Stürze gilt es somit zu vermeiden.

Offenbarung der Erfindung

Die Erfindung ist dadurch gekennzeichnet, dass in einem gattungsgemäßen Verfahren mittels zumindest eines Schwimmwinkelerfassungssensors der Schwimmwinkel des Kraftfahrzeugs erfasst und in der Steuervorrichtung mitverarbeitet wird.

Die Erfindung betrifft auch eine Vorrichtung, die entsprechende Mittel zum Durchführen des erfindungsgemäßen Verfahrens aufweist.

Vorteile der Erfindung

Eine für die fahrdynamische Situation ungünstige Entwicklung kann auf diese Art und Weise frühzeitig erkannt werden und das Fahrzeug wieder stabilisiert werden. Der Schräglaufwinkel an jedem der Räder kann auf diese Weise auf ein sicheres Maß begrenzt werden. Das Fahrverhalten des einspurigen Kraftfahrzeuges wird auch in schwierigen und anspruchsvollen Situationen besser beherrschbar und Stürze werden vermieden. Eine frühere, genauere und dosiertere Steuerung und/oder Regelung des Kraftfahrzeuges wird dadurch ermöglicht. Vorteilhafte Weiterbildungen des Verfahrens sind in den Unteransprüchen beansprucht und werden nachfolgend näher erläutert.

Erfindungsgemäss wird die Geschwindigkeit des Kraftfahrzeugs erfasst und in der Recheneinrichtung mitverarbeitet. Die Stabilisierungseingriffe können dann abhängig von der jeweils vorliegenden Geschwindigkeit oder der jeweils existierenden Beschleunigung ausgelöst werden. Ein feinfühligeres Ansprechen der Steuer- und Regelvorrichtungen, die zu einer Fahrdynamikveränderung des Kraftfahrzeugs führen, werden dadurch ermöglicht.

Wenn der zeitliche Verlauf des Schwimmwinkels erfasst und in der Recheneinrichtung mit verarbeitet wird, ist es möglich, schon früher, insbesondere vor dem Auftreten kritischer Fahrdynamiksituationen, steuernd oder regelnd Stabilisierungseingriffe auszuführen.

Um das Fahrzeug effizient zu stabilisieren, ist es in einem weiteren Ausführungsbeispiel von Vorteil, wenn das Steuersignal ein Entkuppeln, einen Bremseingriff, eine Motorantriebsmomentreduzierung und/oder eine aktive Fahrwerksregelung hervorruft. Bei Kombination der unterschiedlichen Stabilisierungseingriffe werden eine schnellere Stabilisierung und eine höhere Präzision beim Ausrichten des Kraftfahrzeuges zum Vermeiden eines Sturzes bewirkt.

Um nicht nur den Schwimmwinkel des Gesamtfahrzeuges dem Stabilisierungsverfahren zugrunde zu legen, ist es in einer weiteren vorteilhaften Ausführungsvariante zu empfehlen, wenn ein Schwimmwinkelerfassungssensor den Schräglaufwinkel an einem Rad des Kraftfahrzeugs, vorzugsweise am Hinterrad, ermittelt und dieser Schräglaufwinkel in der Recheneinrichtung mitverarbeitet wird. Der Schwimmwinkelerfassungssensor ist somit in der Lage, nicht nur den Schwimmwinkel zu erfassen und weiter zu übermitteln, sondern auch den Schräglaufwinkel zumindest eines Rades zu berücksichtigen und weiter zu übermitteln, so dass in der Recheneinrichtung in der nachgelagerten Steuervorrichtung das Steuersignal generiert werden kann.

Wenn der Schwimmwinkelerfassungssensor ein Radarsensor ist, so wird die Konstruktionsfreiheit deutlich erhöht, da neben Ultraschallsensoren, Infrarotsensoren und Lidarsensoren ("Light Detection and Ranging Sensoren") auch besonders robuste Radarsensoren verwendbar sind. Radarsensoren weisen beim berührungslosen Messen die Vorteile auf, dass sie unabhängig von mechanischen Belastungen sind, einfach montierbar sind und im Wesentlichen wartungsfrei arbeiten, selbst bei schlechten Sichtverhältnissen.

Um das Auslösen des Steuersignals bei als kritisch beurteilten Situationen sicher hervorzurufen, ist es von Vorteil, wenn die Steuervorrichtung das Steuersignal nach Überschreiten eines Grenzwertes auslöst.

Um für jedes Fahrzeug dieselben Situationen abfangen zu können, ist es von Vorteil, wenn der Grenzwert fest voreingestellt ist. Dies ist zum einen werksseitig vornehmbar, so dass für alle Fahrzeuge derselben Art dieselben Auslösecharakteristika vorliegen, oder aber für jeden Fahrzeugführer individuell einstellbar ist, um die Besonderheiten des jeweiligen Fahrstils des jeweiligen Fahrzeugführers zu berücksichtigen.

Die Erfindung betrifft auch eine Vorrichtung, die entsprechende Mittel aufweist, um ein solches Verfahren durchzuführen und ist dann besonders vorteilhaft ausgestaltet, wenn diese Vorrichtung in bestehende einspurige Kraftfahrzeuge nachrüstbar ist.

Kurze Beschreibung der Zeichnungen

Die Erfindung ist mit Hilfe einer Zeichnung nachfolgend näher erläutert. Dabei zeigen:

Figur 1    ein schematisch dargestelltes Motorrad in Kurvenfahrt mit zwei Neigungssensoren und zwei Nicksensoren,

Figur 2    eine schematische Darstellung der Anordnung der Neigungssensoren und Nicksensoren aus Figur 1 mit der von den Sensoren bestrichenen Fläche auf der Fahrbahnoberfläche,

Figur 3    eine vergrößerte Darstellung des Bereichs des Motorrades an dem die Neigungs- und Nicksensoren angebracht sind, sowie der von den Sensoren bestrichene Bereich,

Figur 4    eine schematische Darstellung des "Nickens" eines Kraftfahrzeuges bei einem Bremsmanöver und

Figur 5    eine schematische Darstellung des Ablaufs des Verfahrens in einem Ablaufdiagramm.

Ausführungsformen der Erfindung

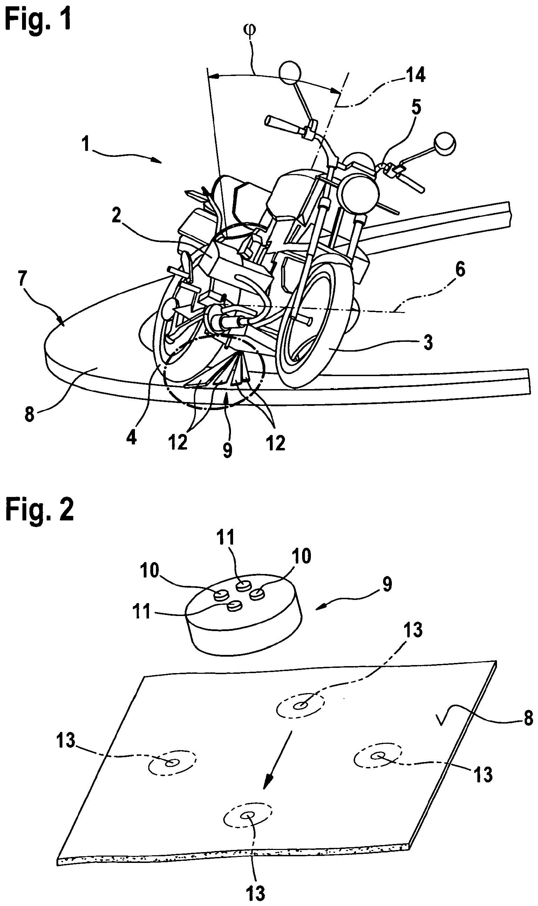

Figur 1 zeigt ein einspuriges Kraftfahrzeug 1. Im dargestellten Ausführungsbeispiel ist das einspurige Kraftfahrzeug ein Motorrad. Das Motorrad weist einen Verbrennungsmotor 2, ein Vorderrad 3 und ein Hinterrad 4 auf. Das Vorderrad 3 ist mittels eines Lenkers 5 relativ zu einer Längsachse 6 des Kraftfahrzeuges 1 auslenkbar. Das Kraftfahrzeug 1 bewegt sich in einer Kurve 7 auf einer Fahrbahn 8. Zwischen dem Hinterrad 4 und dem Vorderrad 3 ist im unteren Bereich des Motorrades eine Sensiervorrichtung 9 angebracht. Die Sensiervorrichtung 9 umfasst zwei Neigungssensoren 10. Die Sensiervorrichtung 9 umfasst ferner zwei Nicksensoren 11. Die Neigungssensoren 10 und Nicksensoren 11 sind besonders gut in Figur 2 erkennbar.

Die Sensiervorrichtung 9 ist als radarbasierte Speed-Vektor-Sensorvorrichtung ausgebildet und weist vier sogenannte Antennenkeulen 12 auf. Jeweils zwei Antennenkeulen 12 werden durch die beiden Neigungssensoren 10 erzeugt. Die zwei anderen Antennenkeulen 12 werden durch die Nicksensoren 11 erzeugt.

Mittels der Sensiervorrichtung 9 wird eine Messung des Abstandes der Sensiervorrichtung 9 zur Oberfläche der Fahrbahn 8 in vier Richtungen, also in Fahrtrichtung und quer zur Fahrtrichtung vorgenommen.

Zwei Aufstandsflächen 13 der durch die Neigungssensoren 10 gebildeten Antennenkeulen 12 sind so ausgerichtet, dass eine Verbindungslinie durch diese Aufstandsflächen orthogonal zur Längsrichtung des Fahrzeuges ausgerichtet ist. Diese zwei Antennenkeulen 12, die durch die Nicksensoren 11 hervorgerufen werden, sind in Längsrichtung des Fahrzeuges, also entlang der Längsachse 6 ausgerichtet. Eine Gerade durch die Aufstandsflächen der durch die Nicksensoren 11 hervorgerufenen Antennenkeulen 12 mit der Oberfläche der Fahrbahn 8 ist orthogonal zu einer Geraden durch die Aufstandsflächen der Antennenkeulen 12, wie sie durch die Neigungssensoren 10 hervorgerufen sind, mit der Oberfläche der Fahrbahn 8.

Die spezielle Anordnung der Neigungssensoren 10 und Nicksensoren 11 ist aus Figur 2 entnehmbar. Dabei kennzeichnet der Pfeil 13 die Fahrtrichtung des Kraftfahrzeugs 1, die in dem dargestellten Ausführungsbeispiel in Figur 2 gleich der Längsachse 6 des Kraftfahrzeuges 1 entspricht. Die Sensiervorrichtung 9 ist in Figur 2 losgelöst vom restlichen Motorrad dargestellt. Die Antennenkeulen 12 sind nicht dargestellt. Allerdings sind die Aufstandsflächen der Antennenkeulen 12 auf der Oberfläche der Fahrbahn 8 dargestellt und mit den Bezugszeichen 13 versehen.

Zurückkommend zu Figur 1 ist dort das Kraftfahrzeug 1 in der Kurve 7 fahrend geneigt dargestellt, so dass zwischen einer vertikalen Achse und einer Hochachse 14 durch das Kraftfahrzeug 1 ein Winkel $\phi$ vorliegt. Der Winkel $\phi$ ist normalerweise geringer als 50° - 60°, im Regelfall 56°. Zwar ist in dem Ausführungsbeispiel nach Figur 1 eine horizontale Fahrbahnoberfläche der Fahrbahn 8 dargestellt, doch ist es möglich, dass die Kurve überhöht ist und somit nicht der Winkel zur Fahrbahnoberfläche, sondern zur Horizontalen relevant bleibt.

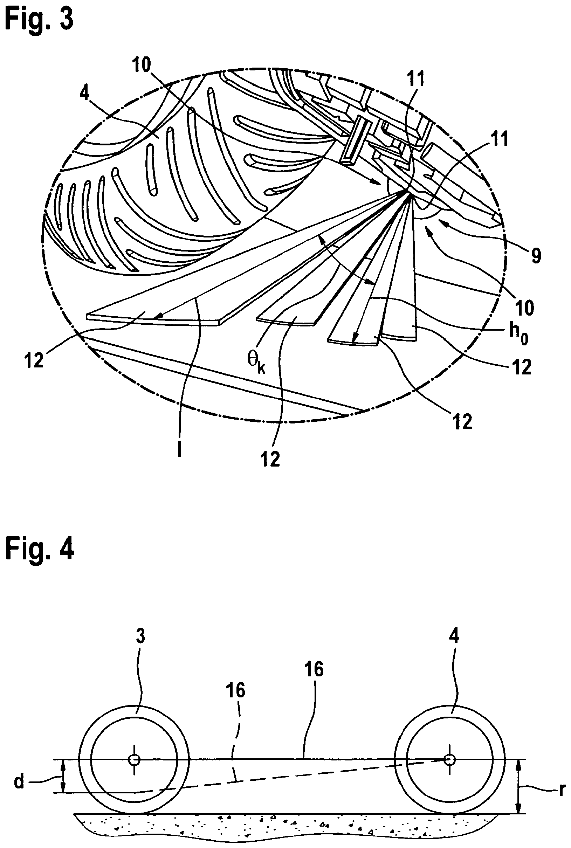

Wie in Figur 3 gut erkennbar, misst eine der Neigungssensoren 10 die Länge I. Die Nicksensoren bestimmen eine Höhe, die über einem entsprechenden Algorithmus zur Höhe $h_0$ umgerechnet werden.

Ferner wird in einer Recheneinrichtung 5, die in den Figuren 1 bis 4 nicht dargestellt ist, ein Winkel $\Theta_k$ ermittelt. In der Recheneinrichtung 15 wird mit nachfolgendem Algorithmus der Winkel $\phi$ bestimmt.

$$\varphi = \Re\left\{\log\left(\frac{l \cdot \exp(j\Theta_k) - h_0}{h_0 - l \cdot \exp(-j\Theta_k)}\right)/2 \cdot j\right\}$$

Auf diese Weise wird der Neigungswinkel mit Hilfe der gemessenen Länge I, also dem Abstand zwischen einem der Neigungssensoren 10 und der Oberfläche der Fahrbahn 8, wobei das Beispiel dargestellt ist, dass eine in Fahrrichtung gesehen rechte Antennenkeule 12 die Basis bildet, bestimmt. Es kann jedoch auch die in Fahrtrichtung gesehen linke Antennenkeule 12 die Basis bilden.

Da es auch ein Ziel der Erfindung ist, die Kenntnis des Anpressdruckes und der Anpressbedingungen in jeder Fahrsituation zur Verfügung zu haben, also auch bei Bremsvorgängen, die ein "Nicken" hervorrufen, und in Kurven, ist in Figur 4 die Auswirkung des Bremsens unter Hervorrufung eines "Nickens" dargestellt. Dabei taucht das Kraftfahrzeug in die am Vorderrad 3 angeordneten Federungen ein, wodurch sich im Bereich des Vorderrades 3 das Fahrzeug um den Betrag d absenkt. Die nach und während des Bremsens eingenommene Position eines Längsträgers 16 ist gestrichelt dargestellt. Der Abstand d ist im Regelfall geringer als der Radius r.

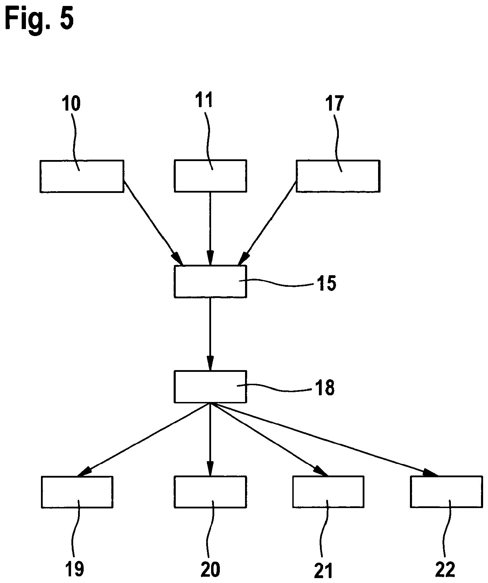

In Figur 5 ist ein Ablaufdiagramm für ein Verfahren gemäß der Erfindung dargestellt. Die Neigungssensoren 10 und Nicksensoren 11 liefern Daten an die Recheneinrichtung 15. Um die Steuer- und Regelgüte zu erhöhen, liefert zumindest ein Schwimmwinkelerfassungssensor 17 zusätzlich Daten an die Recheneinrichtung 15. Der Schwimmwinkelerfassungssensor 17 liefert dabei den Schwimmwinkel, ist jedoch auch in der Lage, entweder den Schräglaufwinkel des Hinterrades und/oder den Schräglaufwinkel des Vorderrades der Recheneinrichtung 15 zuzuführen. Im Schwimmwinkelerfassungssensor 17 findet somit eine Vorverarbeitung der Rohdaten statt. Die Vorverarbeitung der Rohdaten kann jedoch auch in der Recheneinrichtung 15 erfolgen. Es ist möglich, dass der Schwimmwinkelerfassungssensor 17 ein Teil der Sensiervorrichtung 9 ist, die die Neigungssensoren 10 und die Nicksensoren 11 umfasst. Eine entsprechende rechnerische Lösung, um den Schwimmwinkel dann herauszurechnen, ist dann notwendig.

Die Recheneinrichtung 15 liefert ein Signal an eine Steuervorrichtung 18. Dieses Signal ist ein Steuersignal, das durch die Recheneinrichtung 15 in Verarbeitung der zugeführten Daten erzeugt ist. Die Steuervorrichtung 18 wirkt nun auf eines oder mehrere der Steuer- und Regelvorrichtungen, wie eine Kupplungsvorrichtung 19, eine Bremsvorrichtung 20, eine aktive Fahrwerksregelvorrichtung 21 und eine Geschwindigkeitsregelvorrichtung 22. Durch entsprechendes kurzzeitiges Auskuppeln des Motors, kurzzeitiges Bremsen, weicher oder härter Stellen des Fahrwerks und/oder Hinzuführen oder Zurücknehmen von Gas, wird das Fahrzeug dann wieder stabilisiert.

Gemäß der Erfindung wird nicht mehr nur der Neigungswinkel und der Nickwinkel zum Hervorrufen vorher stabilisierender Brems- und Steuereingriffen genutzt, sondern der Schwimmwinkel und/oder die Schräglaufwinkel. Dadurch wird früher und sicherer das Fahrzeug durch entsprechende Stabilisierungseingriffe bzgl. des fahrdynamischen Verhaltens wieder stabilisiert. Stürze von solchen einspurigen Kraftfahrzeugen 1 und insbesondere der Fahrzeugführer solcher einspuriger Kraftfahrzeuge 1 werden wirkungsvoll verhindert.

Die Verkehrssicherheit eines entsprechenden einspurigen Kraftfahrzeuges, wie einem Motorrad, wird dadurch erhöht.

**Patentansprüche**

1. Verfahren zum Stabilisieren einer Fahrbewegung eines einspurigen Kraftfahrzeugs (1), wie einem Motorrad, bei dem über Neigungssensoren (10) ein Neigungswinkel des Kraftfahrzeugs (1) relativ zu einer Fahrbahn (8) erfasst wird und nach Verarbeitung des Neigungswinkels in einer Recheneinrichtung (15) ein darauf basierendes Steuersignal einer Steuervorrichtung (18) zum Bewirken eines Stabilisierungseingriffes in die Fahrbewegung des Kraftfahrzeuges (1) zugeführt wird und die Geschwindigkeit des Kraftfahrzeugs (1) erfasst und in der Recheneinrichtung (15) mitverarbeitet wird, **dadurch gekennzeichnet, dass** mittels zumindest eines Schwimmwinkelerfassungssensors (17) der Schwimmwinkel des Kraftfahrzeugs (1) erfasst und in der Steuervorrichtung (18) mitverarbeitet wird.

2. Verfahren nach Anspruch 1, wobei der zeitliche Verlauf des Schwimmwinkels erfasst und in der Recheneinrichtung (15) mitverarbeitet wird.

3. Verfahren nach einem der Ansprüche 1 bis 2, wobei das Steuersignal ein Entkuppeln, einen Bremseingriff, eine Motorantriebsmomentreduzierung und/oder eine aktive Fahrwerksregelung hervorruft.

4. Verfahren nach einem der Ansprüche 1 bis 3, wobei einer der Schwimmwinkelerfassungssensoren (17) einen Schräglaufwinkel an einem Rad des Kraftfahrzeuges (1), vorzugsweise an einem Hinterrad (4) ermittelt und dieser Schräglaufwinkel in der Recheneinrichtung (15) mit verarbeitet wird.

5. Verfahren nach einem der Ansprüche 1 bis 4, wobei der Schwimmwinkelerfassungssensor (17) ein Radarsensor ist.

6. Verfahren nach einem der Ansprüche 1 bis 5, wobei die Steuervorrichtung (18) das Steuersignal nach Überschreiten eines Grenzwertes auslöst.

7. Verfahren nach Anspruch 6, wobei der Grenzwert fest voreingestellt ist.

8. Vorrichtung, aufweisend Mittel zum Durchführen des Verfahrens nach einem der vorhergehenden Ansprüche.

## Claims

1. Method for stabilizing a driving movement of a single-track motor vehicle (1), such as a motorbike, in which an angle of inclination of the motor vehicle (1) relative to an underlying surface (8) is detected by means of inclination sensors (10), and after the processing of the angle of inclination in a computer device (15) a control signal which is based thereon is fed to a control device (18) to bring about a stabilization intervention into the driving movement of the motor vehicle (1), and the speed of the motor vehicle (1) is detected and is also processed in the computer device (15), **characterized in that** the sideslip angle of the motor vehicle (1) is detected by means of at least one sideslip angle-detection sensor (17) and is also processed in the control device (18).

2. Method according to Claim 1, wherein the time profile of the sideslip angle is detected and is also processed in the computer device (15).

3. Method according to one of Claims 1 to 2, wherein the control signal brings about declutching, a braking intervention, a reduction in the engine drive torque and/or active control of the chassis.

4. Method according to one of Claims 1 to 3, wherein one of the sideslip angle-detection sensors (17) determines a slip angle at a wheel of the motor vehicle (1), preferably at a rear wheel (4), and this slip angle is also processed in the computer device (15).

5. Method according to one of Claims 1 to 4, wherein the sideslip angle-detection sensor (17) is a radar sensor.

6. Method according to one of Claims 1 to 5, wherein the control device (18) triggers the control signal after a limiting value is exceeded.

7. Method according to Claim 6, wherein the limiting value is permanently preset.

8. Device having means for carrying out the method according to one of the preceding claims.

## Revendications

1. Procédé de stabilisation d'un mouvement de déplacement d'un véhicule automobile (1) monovoie, tel qu'une motocyclette, selon lequel un angle d'inclinaison du véhicule automobile (1) par rapport à la voie de circulation (8) est détecté par le biais de capteurs d'inclinaison (10) et, après le traitement de l'angle d'inclinaison dans un dispositif de calcul (15), un signal de commande basé sur celui-ci est acheminé à un arrangement de commande (18) en vue de produire une intervention de stabilisation dans le mouvement de déplacement du véhicule automobile (1), et la vitesse du véhicule automobile (1) est acquise et traitée conjointement dans le dispositif de calcul (15), **caractérisé en ce que** l'angle de flottement du véhicule automobile (1) est détecté au moyen d'au moins un capteur de détection d'angle de flottement (17) et traité conjointement dans le dispositif de calcul (15).

2. Procédé selon la revendication 1, le tracé dans le temps de l'angle de flottement étant acquis et traité conjointement dans le dispositif de calcul (15).

3. Procédé selon l'une des revendications 1 à 2, le signal de commande provoquant un débrayage, une intervention de freinage, une réduction du couple d'entraînement du moteur et/ou une régulation active du mécanisme roulant.

4. Procédé selon l'une des revendications 1 à 3, l'un des capteurs de détection d'angle de flottement (17) déterminant un angle de lacet au niveau d'une roue du véhicule automobile (1), de préférence au niveau d'une roue arrière (4) et cet angle de lacet étant traité conjointement dans le dispositif de calcul (15).

5. Procédé selon l'une des revendications 1 à 4, le capteur de détection d'angle de flottement (17) étant un capteur radar.

6. Procédé selon l'une des revendications 1 à 5, l'arrangement de commande (18) déclenchant le signal de commande après le dépassement d'une valeur limite.

7. Procédé selon la revendication 6, la valeur limite étant prédéfinie de manière fixe.

8. Arrangement, possédant des moyens pour mettre en oeuvre le procédé selon l'une des revendications précédentes.

# Fig. 1

# Fig. 2

# Fig. 3

# Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4117540 A1
- DE 10238526 A1
- US 7006901 B2